Europäisches Patentamt

European Patent Office

Office européen des brevets

(11) Veröffentlichungsnummer: 0 308 604
A1

# (12) EUROPÄISCHE PATENTANMELDUNG

(21) Anmeldenummer: 88111257.7

(22) Anmeldetag: 13.07.88

(51) Int. Cl.⁴: G02B 6/42

(30) Priorität: 25.09.87 DE 3732463

(43) Veröffentlichungstag der Anmeldung:
29.03.89 Patentblatt 89/13

(84) Benannte Vertragsstaaten:
DE FR GB

(71) Anmelder: Siemens Aktiengesellschaft Berlin
und München
Wittelsbacherplatz 2
D-8000 München 2(DE)

(72) Erfinder: Keil, Rudolf, Dr.
Pulverturmstrasse 27
D-8000 München 45(DE)
Erfinder: Mayerhofer, Franz
Primelstrasse 34
D-8039 Puchheim(DE)
Erfinder: Hörmann, Ewald
Krankenhausstrasse 2 c
D-8150 Holzkirchen(DE)

(54) Koppeloptik zum Einkoppeln des von einem Halbleiterlaser ausgesandten Laserlichts in einen optischen Wellenleiter.

(57) Neues Konstruktionsprinzip für Koppeloptiken zum Ankoppeln eines Halbleiterlasers an eine Monomode- oder Multimodefaser, das auf einfache Weise einen höheren Koppelwirkungsgrad und eine hohe Rückstreudämpfung ermöglicht.

Nach diesem Prinzip weist die Koppeloptik zumindest einen im Strahlengang des Laserlichts angeordneten Hohlspiegel (HSp), vorzugsweise ausschließlich einen oder zwei solche Spiegel auf, die einfach herstellbar sind.

Anwendung bei der optischen Nachrichtentechnik, insbesondere Sender und Sendemodule.

FIG 4

## Koppeloptik zum Einkoppeln des von einem Halbleiterlaser ausgesandten Laserlichts in einen optischen Wellenleiter.

Die Erfindung betrifft eine Koppeloptik zum Einkoppeln des von einem Halbleiterlaser ausgesandten Laserlichts in einen optischen Wellenleiter nach dem Oberbegriff des Patentanspruchs 1.

Koppeloptiken der genannten Art werden neben anderen in der optischen Nachrichtentechnik zum Ankoppeln eines Halbleiterlasers an eine Monomode- oder Multimode-Glasfaser benötigt. Dabei soll bei hohem Einkoppelwirkungsgrad des Laserlichts in den Wellenleiter eine möglichst geringe Rückreflexion in den Laser vorhanden sein.

Bekannte Koppeloptiken der genannten Art, mit denen dies erreicht werden kann, sind aus einer oder mehreren brechenden Linsen, beispielsweise Kugellinsen, aufgebaut. Sie haben überdies den Vorteil, daß bei ihnen die Möglichkeit besteht, Zwischenelemente, wie beispielsweise einen optischen Isolator, ein Filterplättchen, einen Strahlteiler und anderes, in den Strahlengang zwischen Laser und Wellenleiter einzufügen, die für hochratige oder bidirektionale Übertragung vorliegen müssen.

Mit einem optischen Isolator lassen sich Rückwirkungen von der vom Laser abgekehrten Seite des Isolators her auf den Laser sehr stark unterdrücken. Nicht zu vermeiden ist jedoch, daß Rückreflexionen auf der dem Laser zugekehrten Seite des Isolators, beispielsweise von einer zwischen dem Laser und dem Isolator angeordneten Kugellinse zum Laser zurück gelangen. Rückreflexionen an einer solchen Kugellinse können nur durch eine entsprechende Entspiegelung vermindert werden. Gute Kugelentspiegelungen sind jedoch schwierig zu realisieren.

Der erreichbare Koppelwirkungsgrad der genannten bekannten Koppeloptiken ist relativ gering. Bei einer Optik mit zwei Kugellinsen beträgt er 30 bis 50 %. Hauptursachen des relativ geringen Koppelwirkungsgrades sind Linsenfehler und Verluste durch Fresnel-Reflexionen sowie die meist elliptische Nahfeldverteilung des Laserlichts bzw. der meist elliptische Lichtfleck in der Lichtaustrittsfläche des Lasers, die bzw. der sich mit sphärischen Linsen oder Kugellinsen nicht verlustfrei auf den in der Faser geführten, rotationssymmetrischen Modus bzw. die entsprechend ausgebildete Faser-Endflächenbereich abbilden läßt, über den das Licht in die Faser eingekoppelt wird.

Aufgabe der Erfindung ist es, ein neues Konstruktionsprinzip für Koppeloptiken der eingangs genannten Art anzugeben, das auf einfache Weise einen höheren Koppelwirkungsgrad und eine hohe Rückstreudämpfung ermöglicht.

Diese Aufgabe wird durch die im kennzeichnenden Teil des Patentanspruchs 1 angegebenen Merkmale gelöst.

Ein grundsätzlicher Vorteil der erfindungsgemäßen Koppeloptik ist darin zu sehen, daß Hohlspiegel bei ausreichender Oberflächengüte der Spiegelfläche keine Rückreflexionen zum Laser erzeugen. Darüber hinaus kann ihre Spiegelfläche in verschiedenen Krümmungsformen auf einfache Weise durch Prägen hergestellt werden. Besonders geeignet ist dafür beispielsweise ein mit Gold überzogenes Kupferstück, in welches die Hohlspiegelfläche mittels eines Prägestempels eingeprägt wird.

Eine erste vorteilhafte und konkrete Ausführungsform der erfindungsgemäßen Koppeloptik, die aus nur einem einzigen Hohlspiegel besteht, ist im Anspruch 2 angegeben. Diese erste Ausführungsform stellt im Verhältnis zwischen den Längen der kleinen und großen Halbachse des die Spiegelfläche definierenden Rotationsellipsoids und im Einstrahlwinkel des Laserlichts zwei Freiheitsgrade bereit, die eine fast verzerrungsfreie Anpassung des Fernfeldes des Halbleiterlasers an das Fernfeld des Wellenleiters ermöglichen. Diese Anpassung ist zur Erreichung eines hohen Einkoppelwirkungsgrades erforderlich.

Vorteilhafte Ausführungsformen der erfindugnsgemäßen Koppeloptik mit zwei Hohlspiegeln gehen aus den Ansprüchen 3 und 4 hervor. Auch bei diesen Ausführungsformen stehen mit dem Einstrahlwinkel und den Krümmungen der Hohlspiegel genügend Freiheitsgrade für die möglichst verzerrungsfreie Anpassung des Fernfeldes des Halbleiterlasers an das Fernfeld des Wellenleiters zur Verfügung. Darüberhinaus kann vorteilhafterweise in den kollimierten oder nahezu kollimierten Strahlengang zwischen den beiden Hohlspiegeln ein optischer Isolator oder ein anderes Zwischenelement angeordnet werden.

Eine weitere Ausführungsform der erfindungsgemäßen Koppeloptik ist im Anspruch 5 angegeben. Diese kann beispielsweise aus einer Koppeloptik nach Anspruch 3 oder 4 dadurch gebildet werden, daß einer der beiden Hohlspiegel, vorzugsweise der in Ausbreitungsrichtung des Laserlichts dem einen Hohlspiegel nachgeordneten anderen Hohlspiegel durch eine brechende Linse ersetzt wird, deren Brechkraft ausreicht, das auftreffende Laserlicht zu fokussieren.

Zur Vermeidung von Rückreflexionen ist es vorteilhaft, eine Koppelanordnung mit einem Halbleiterlaser mit einem optischen Wellenleiter und einer erfindungsgemäßen Koppeloptik nach den Ansprüchen 2 bis 4 so zu gestalten, wie es im Anspruch 6 angegeben ist. Bei den erfindungsgemäßen Koppeloptiken nach den Ansprüchen 2 bis 4 ist die Endfläche des Wellenleiters, über die das Laserlicht eingekoppelt wird, die erste Fläche, die auf den Laser rückwirken kann, da der oder die Hohlspiegel selbst praktisch kein Licht in den Laser zurückreflektieren. Durch die im Anspruch 6 angegebene Maßnahme wird vermieden, daß der Reflex an der Endfläche auf den Laser rückwirkt. Die Schrägstellung der Endfläche des Wellenleiters kann zusätzlich auch zur besseren Anpassung eines Laserstrahls mit stark elliptischem Querschnitt, wie er beispielsweise beim MCRW-Laser auftritt, an den in einer Faser geführten, rotationssymmetrischen Modus genützt werden. Dabei ist es aber erforderlich, daß die Achse des auf die Endfläche des Wellenleiters einfallenden Laserstrahls in einem Winkel zueinander angeordnet sind.

Die Erfindung wird anhand der Figuren in der folgenden Beschreibung näher erläutert. Von den Figuren zeigen:

Figur 1 eine halbe Ellipse, die um ihre große Achse gedreht, ein Rotationsellipsoid erzeugt, das eine Spiegelfläche eines Hohlspiegels definiert, sowie den Verlauf von Lichtstrahlen, die von einem Brennpunkt der Ellipse ausgehen und nach Reflexion an einer solchen Spiegelfläche im anderen Brennpunkt wieder fokussiert werden,

Figur 2 und 3 jeweils eine Fernfeldverteilung des Halbleiterlaser, eine Fernfeldverteilung des Wellenleiters und eine Fernfeldverteilung des durch den Hohlspiegel mit der durch das Ellipsoid nach Figur 1 definierten Spiegelfläche abgebildeten Fernfeldes des Lasers, wobei die in Figur 2 gezeigten Fernfeldverteilungen in der Zeichenebene der Figur 1 gemessen sind, während die in Figur 3 gezeigten Fernfeldverteilungen senkrecht zu dieser Zeichenebene gemessen sind,

Figur 4 eine Draufsicht auf eine Koppelanordnung, die mit einem Halbleiterlaser, einem Wellenleiter und einem Hohlspiegel realisiert ist, dessen Spiegelfläche durch das Ellipsoid nach Figur 1 definiert ist,

Figur 5 und 6 jeweils schematisch eine Koppeloptik aus zwei Hohlspiegeln, von denen einer eine durch ein Elipsoid definierte Spiegelfläche und der andere eine durch ein Hyperboloid definierte Spiegelfläche aufweist, wobei in Figur 5 die ellipsoidförmige Spiegelfläche und in Figur 6 die hyperboloidförmige Spiegelfläche in Ausbreitungsrichtung des Laserstrahls zuerst angeordnet ist,

Figur 7 schematisch eine Koppeloptik aus zwei Hohlspiegeln, deren Spiegelflächen durch Paraboloide definiert sind,

Figur 8 schematisch eine Koppeloptik mit einem Hohlspiegel und einer brechenden Linse, und

Figur 9 eine Seitenansicht eines Endabschnitts einer Faser mit einer Endfläche, die schräg zur Achse des Wellenleiters und auch schräg zur Achse des auf die Endfläche einfallenden Laserstrahls angeordnet ist.

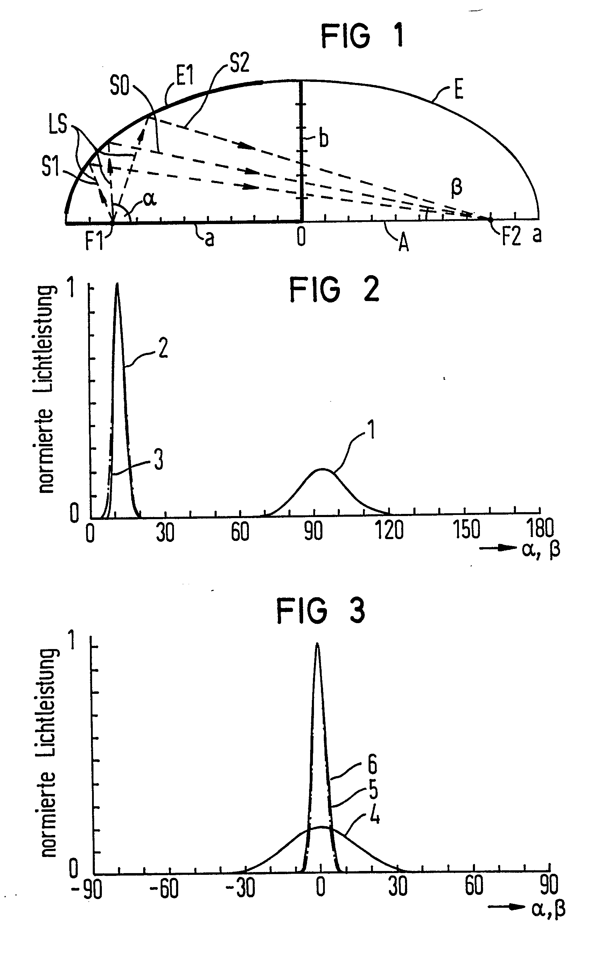

In der Figur 1 ist mit E eine Ellipse bezeichnet, von welcher nur der oberhalb ihrer großen Achse A liegende Kurventeil dargestellt ist. Die große Halbachse dieser Ellipse E ist dicker gezeichnet und mit a, ihre kleine Halbachse mit b bezeichnet. Die beiden Brennpunkte der Ellipse E sind mit F1 und F2 bezeichnet.

Wird die Ellipse E um ihre große Achse A gedreht, beschreibt sie ein Rotationsellipsoid mit den zwei Brennpunkten F1 und F2. Von einem Brennpunkt F1 oder F2 ausgehende Lichtstrahlen, die an der Innenseite des Ellipsoids reflektiert werden, werden auf den anderen Brennpunkt F2 bzw. F1 fokussiert. In der Figur 1 sind drei solche Strahlen eingezeichnet und mit S0, S1 und S2 bezeichnet.

Beispielsweise können die Strahlen S1 und S2 zwei begrenzende äußere Randstrahlen und der Strahl S0 ein Achsstrahl eines von dem Brennpunkt F1 ausgehenden divergenten Laserstrahls LS eines Halbleiterlasers sein. Der Einstrahlwinkel dieses Laserstrahls LS ist durch einen Winkel $\alpha$ am Brennpunkt F1 definiert, den der Achsstrahl S0 dieses Laserstrahls LS mit der großen Achse A der Ellipse E einschließt, während der Abstrahlwinkel dieses Strahls LS durch einen Winkel $\beta$ definiert ist, den der Achsstrahl S0 am anderen Brennpunkt F2 mit der großen Achse A einschließt.

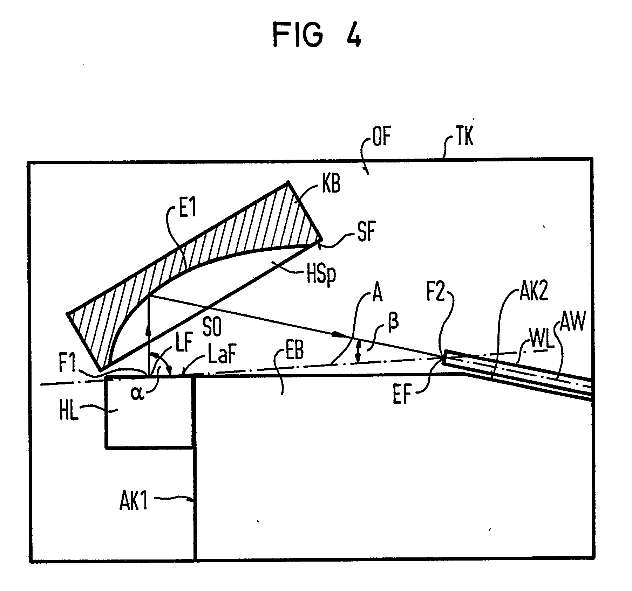

Das Nahfeld bzw. der Lichtfleck LF in einer Lichtaustrittsfläche LaF eines Halbleiterlasers HL (siehe Figur 4) ist dabei im Brennpunkt F1 und eine Endfläche EF des Wellenleiters WL zum Einkoppeln von Licht in den Wellenleiter WL (siehe Figur 4) ist im anderen Brennpunkt F2 anzuordnen. Der Wellenleiter WL ist so angeordnet, daß seine Achse AW mit der großen Achse A der Ellipse E den Abstrahlwinkel $\beta$ einschließt oder mit dem am Ellipsoid reflektierten Achsstrahl S0 des Laserstrahls LS zusammenfällt. Zur Anpassung eines Laserstrahls mit stark elliptischem Querschnitt an den rotationssymmetrischen Mode des Wellenleiters empfiehlt sich eine Anordnung des Wellenleiters WL unter einem anderen Winkel, der beispielsweise etwas größer als $\beta$ ist.

Der Wellenleiter WL kann eine Monomode- oder Multimodefaser oder ein entsprechender anderer Wellenleiter mit rundem Querschnitt sein.

Um einen hohen Einkoppelwirkungsgrad in den Wellenleiter WL zu erreichen, muß die Fernfeldverteilung des Lasers HL durch den Hohlspiegel der Fernfeldverteilung des Wellenleiters WL angepaßt werden. Beispielsweise ist bei einem Halbleiterlaser HL in Form einer Laserdiode, die bei der Wellenlänge λ = 1,3 μm strahlt, und bei einem Wellenleiter WL in Form einer Monomodefaser der Durchmesser des Fernfeldes der Laserdiode etwa fünfmal größer als der Durchmesser des Fernfeldes der Monomodefaser.

Zur Anpassung der Fernfelder des Lasers HL und des Wellenleiters WL stehen der Einstrahlwinkel α des Laserstrahls LS sowie das Verhältnis b/a zwischen den Halbachsen b und a des Ellipsoids zur Verfügung. Für die genannte Laserdiode und die genannte Monomodefaser haben sich eine Vergrößerung V = dα /dβ = 4,8, ein Einstrahlwinkel α = 94° und ein Verhältnis b/a = 0,6 als günstiger Kompromiß erwiesen.

Die Figur 2 zeigt für diesen Fall die in der Zeichenebene der Figur 1 gemessenen und Fernfeldverteilungen der Laserdiode und der Monomodefaser sowie die durch das Ellipsoid transformierte Fernfeldverteilung der Laserdiode, die alle auf 1 normiert sind. Die Fernfeldverteilung der Laserdiode ist durch die Kurve 1, die Fernfeldverteilung der Monomodefaser durch die strichpunktierte Kurve 2 und die transformierte Fernfeldverteilung der Laserdiode durch die Kurve 3 gegeben. Diese Kurven sind über dem Einstrahlwinkel α bzw. dem Abstrahlwinkel β aufgetragen. Auf der Abszisse ist die in Bezug auf das Fernfeld der Monomodefaser auf 1 normierte Lichtleistung aufgetragen.

Wie durch den Vergleich der Kurve 3 mit der Kurve 2 zu entnehmen ist, ist die transformierte Fernfeldverteilung der Laserdiode etwas unsymmetrisch. Die unsymmetrische Verzerrung ist jedoch relativ gering und senkt den Koppelwirkungsgrad nur etwa um den Faktor 0,95.

In der Figur 3 sind für den genannten Fall die in Ebenen senkrecht zur Zeichenebene in Figur 1, in denen der eingestrahlte bzw. reflektierte Achsstrahl S0 liegt, gemessenen Fernfeldverteilungen der Laserdiode und der Monomodefaser sowie die durch das Ellipsoid transformierte Fernfeldverteilung der Laserdiode dargestellt, die ebenfalls alle auf 1 normiert sind. Die Fernfeldverteilung der Laserdiode ist durch die Kurve 4, die Fernfeldverteilung der Monomodefaser durch die strichpunktierte Kurve 5 und die transformierte Fernfeldverteilung der Laserdiode durch die Kurve 6 gegeben. Die Kurven 4 bis 6 sind über dem Einstrahlwinkel α bzw. dem Abstrahlwinkel β in den genannten Ebenen aufgetragen. Auf der Ordinate ist die in Bezug auf die Feldverteilung der Monomodefaser auf 1 normierte Lichtleistung aufgetragen.

Wie der Vergleich der Kurve 5 mit der Kurve 6 in Figur 3 zeigt, ist die transformierte Fernfeldverteilung der Laserdiode gegenüber der Fernfeldverteilung der Monomodefaser etwas symmetrisch verzerrt. Diese symmetrische Verzerrung kann zur Anpassung eines unsymmetrischen Lichtflecks bzw. Nahfeldes der Laserdiode ausgenutzt werden. Bei gut reflektierenden Hohlspiegeln und entsprechend justiertem Laser und Wellenleiter kann daher ein Koppelwirkungsgrad erreicht werden, der größer ist als bei einer brechenden sphärischen Linse.

In dem Fall nach den Figuren 2 und 3 ist eine Laserdiode mit einer Weite des Lichtflecks bzw. Nahfeldes senkrecht zur laseraktiven Schicht von 1,2 μm und einer Weite dieses Flecks parallel zu dieser Schicht von 0,8 μm sowie eine Fleckweite der Monomodefaser von 5 μm angenommen.

In der in Figur 4 in Draufsicht dargestellten Koppelanordnung ist ein rotationsellipsoidförmiger Hohlspiegel HSp verwendet, dessen Spiegelfläche durch den dicker gezeichneten Kurvenabschnitt E1 in Figur 1 definiert ist. Der Hohlspiegel HSp ist beispielsweise durch Einprägen eines entsprechend geformten Prägestempels in einen mit Gold überzogenen Kupferblock KB hergestellt, der danach auf einer Oberfläche eines Trägerkörpers TK so fixiert wird, daß der Hohlspiegel HSp in einer vertikal zur Oberfläche OF des Trägerkörpers TK angeordneten Seitenfläche SF des Kupferblocks KB angeordnet ist.

Der Hohlspiegel HSp ist dabei so angeordnet, daß seine Spiegelfläche durch ein Rotationsellipsoid mit einer zur Zeichenebene der Figur 4 parallelen großen Achse definiert ist, das durch Drehung der Ellipse E in Figur 1 um dessen große Achse A erzeugt wird.

Der Kupferblock KB ist in Höhe der großen Achse A des definierenden Ellipsoids parallel zur Zeichenebene geschnitten dargestellt. Die gekrümmte Schnittlinie in Figur 4 entspricht demnach dem dicker gezeichneten Kurvenabschnitt E1 der Ellipse E in Figur 1.

Auf dem Trägerkörper TK ist ein erhabener Bereich EB ausgebildet, der vertikal zur Zeichenebene der Figur 4 angeordnete seitliche Anschlagkanten AK1 und AK2 aufweist, an denen der Halbleiterlaser HL bzw. der Wellenleiter WL in der richtigen Orientierung zum Hohlspiegel HSp fixiert sind.

Der Halbleiterlaser HL ist an der Anschlagkante AK1 so fixiert, daß der Lichtfleck LF in der Lichtaustrittsfläche LaF des Lasers HL in dem einen Brennpunkt F1 des Ellipsoids angeordnet ist, und daß der Achsstrahl S0 des von diesem Lichtfleck LF divergent abgestrahlten Laserstrahls sich parallel zur Zeichenebene der Figur 4 im Einstrahlwinkel α = 94° zur großen Achse A des Ellipsoids ausbreitet. Der am Hohlspiegel HSp reflektierte Achsstrahl S0 breitet sich parallel zur Zeichenebene der Figur 4 im Abstrahlwinkel β zur großen Achse A aus und trifft den anderen Brennpunkt F2 des Ellipsoids. In diesem anderen Brennpunkt F2 ist eine Endfläche EF des Wellenleiters WL angeordnet, dessen Achse AW beispielsweise im Abstrahlwin-

kel $\beta$ zur großen Achse A des Ellipsoids angeordnet ist. Wie schon erwähnt wurde, könnte die Achse AW auch in einem vom Abstrahlwinkel $\beta$ etwas verschiedenen Winkel zur großen Achse A angeodnet sein.

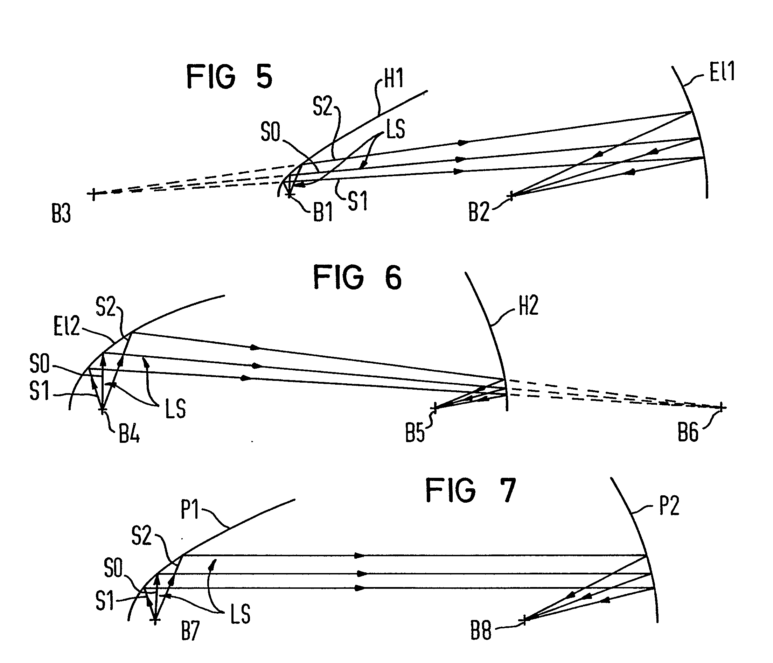

Die Figuren 5 bis 7 zeigen schematisch Koppeloptiken mit zwei Hohlspiegeln, wobei von den Hohlspiegeln nur Kurvenstücke, welche die Hohlspiegelflächen erzeugen, und die zugeordneten Brennpunkte dargestellt sind.

Bei der Koppeloptik nach Figur 5 bezeichnet H1 ein Stück eines Zweiges einer Doppelhyperbel mit den Brennpunkten B1 und B3, die ein Rotationshyperboloid erzeugt, wenn sie um eine die beiden Brennpunkte B1 und B3 verbindende Verbindungsgerade gedreht wird. Der Laserstrahl LS geht von dem einen Brennpunkt B1 des Hyperboloids aus. Mit EL1 ist ein Kurvenstück einer Ellipse mit dem Brennpunkt B2 und dem anderen Brennpunkt bezeichnet, der mit dem Brennpunkt B3 des Hyerboloids zusammenfällt, und die bei Drehung um eine diese beiden Brennpunkt B2 und B3 verbindende Verbindungsgerade ein Rotationsellipsoid mit im Vergleich zum Hyperboloid größerer Brennweite erzeugt. Die Brennpunkte B1, B2 und B3 liegen nicht notwendig auf einer gemeinsamen Geraden. Der am Hyperboloid reflektierte und etwas divergente Laserstrahl LS wird von der Ellipsoidfläche auf den Brennpunkt B2 fokussiert.

Bei der Koppeloptik nach Figur 6 sind die Verhältnisse im Vergleich zur Koppeloptik nach Figur 5 genau umgekehrt. Das Kurvenstück EL2 ist aus einer Ellipse mit den Brennpunkten B4 und B6, die bei Drehung um die Verbindungsgerade dieser Brennpunkte B4 und B6 ein Rotationsellipsoid erzeugt. Der Laserstrahl LS geht von dem einen Brennpunkt B4 dieser Ellipse aus. Das Kurvenstück H2 ist aus einem Zweig einer Doppelhyperbel mit den Brennpunkten B5 und B6, die bei Drehung um eine Verbindungsgerade dieser Brennpunkte B5 und B6 ein Rotationshyperboloid mit im Vergleich zu dem letztgenannten Ellipsoid größerer Brennweite erzeugt. Der an diesem Ellipsoid reflektierte und leicht konvergente Laserstrahl LS wird vom Hyperboloid auf den Brennpunkt B5 fokussiert. Der Brennpunkt B6 ist ein gemeinsamer Brennpunkt von Ellipsoid und Hyperboloid und alle Brennpunkte B4, B5 und B6 liegen nicht notwendig auf einer gemeinsamen Geraden.

Bei der Koppeloptik nach Figur 7 sind die beiden Kurvenstücke P1 und P2 aus Parabeln, von denen die eine den Brennpunkt B7 und die andere den Brennpunkt B8 hat. Bei Drehung der beiden verschiedenen Parabeln um ihre Symmetrieachsen entstehen Rotationsparaboloide. Diese Symmetrieachsen müssen nicht notwendig zusammenfallen, sondern können auch parallel versetzt sein. Der Laserstrahl LS geht von dem Brennpunkt B7 des Paraboloids mit der kleineren Brennweite aus. Der an diesem Paraboloid reflektierte und parallele Strahl wird von dem anderen Paraboloid mit der größeren Brennweite auf dessen Brennpunkt B8 fokussiert, in dem die Endfläche des Wellenleiters anzuordnen ist.

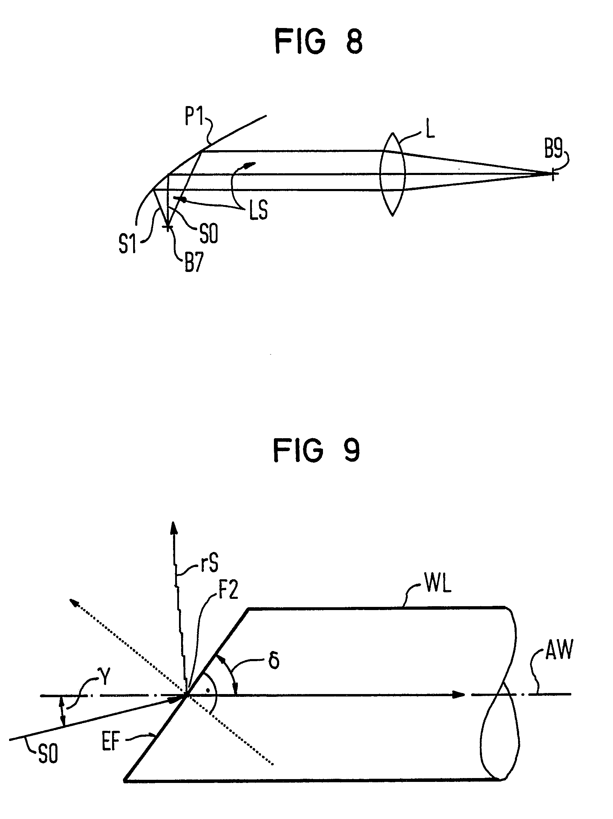

Bei der Koppeloptik nach Figur 8 sind ein Hohlspiegel und eine brechende Linse kombiniert. Der Hohlspiegel ist beispielsweise ein paraboloidförmiger Hohlspiegel, der durch das Parabelstück P1 in Figur 7 definiert ist und den gleichen Brennpunkt B7 und die gleiche Brennweite hat. Die brechende Linse ist beispielsweise eine sphärische Linse L mit der Brennweite des durch das Parabelstück P2 in Figur 7 definierten paraboloidförmigen Hohlspiegels. Der Laserstrahl LS geht vom Brennpunkt B7 des Paraboloids aus und der an diesem Paraboloid reflektierte, parallele Laserstrahl LS wird von der Linse L auf deren Brennpunkt B9 fokussiert.

Die Koppeloptiken nach den Figuren 5 bis 8 haben den Vorteil, daß Zwischenelemente, wie beispielsweise ein optischer Isolator oder Filter, eingebaut werden können und die Justage vereinfacht wird.

In der Figur 9 ist in der gleichen Draufsicht wie in der Figur 4 aber vergrößert der Endabschnitt des Wellenleiters WL mit der im anderen Brennpunkt F2 des dortigen Ellipsoids angeordneten Endfläche (EF) dargestellt. Diese Endfläche (EF) ist in einem Winkel schräg zur Achse AW des Wellenleiters WL angeordnet. Der an einer solchen Endfläche reflektierte Strahl rS gelangt nicht mehr in den Laserkanal zurück und stört daher nicht mehr.

Die schräge Anordnung der Endfläche EF kann zusätzlich zur besseren Anpassung eines Laserstrahls mit stark elliptischem Querschnitt, wie er beispielsweise beim MCRW-Laser auftritt, an den rotationssymmetrischen Wellenleitermodus genutzt werden. Der Achsstrahl S0 des auf diese Endfläche EF einfallenden Laserstrahls sollte in diesem Fall auch unter einem Winkel zur Achse AW des Wellenleiters WL einfallen.

## Ansprüche

1. Koppeloptik zum Einkoppeln des von einem Halbleiterlaser (HL) ausgesandten Laserlichts in einen optischen Wellenleiter (WL), wobei die Koppeloptik einen das Laserlicht aussendenden Lichtfleck (LF) in einer Lichtaustrittsfläche (LaF) des Halbleiterlasers (HL) auf eine Endfläche (EF) des Wellenleiters (WL) abbildet, **dadurch gekennzeichnet, daß** die Koppeloptik zumindest einen im Strahlengang (S0, S1, S2) des Laserlichst angeordneten Hohlspiegel (HSp) aufweist.

2. Koppeloptik nach Anspruch 1, **gekennzeichnet durch** einen Hohlspiegel (HSp), dessen Spiegelfläche durch ein Rotationsellipsoid (E) definiert ist, wobei in einem (F1) der beiden Brennpunkte (F1, F2) dieses Rotationsellipsoids (E) der Lichtfleck (LF) des Lasers (HL) und in dem anderen Brennpunkt (F2) die Endfläche (EF) des Wellenleiters (WL) anzuordnen ist.

3. Koppeloptik nach Anspruch 1, **gekennzeichnet durch** einen Hohlspiegel, dessen Spiegelfläche durch ein Rotationsellipsoid (EL1; EL2) definiert ist, und durch einen Hohlspiegel, dessen Spiegelfläche durch ein Rotationshyperboloid (H1; H2) definiert ist, wobei die Hohlspiegel im Strahlengang (S0, S1, S2) des Laserlichts nacheinander angeordnet und Hyperboloid (H1; H2) und Ellipsoid (EL1; EL2) so bemessen sind, daß das von dem in einem Brennpunkt (B1; B4) des Hyperboloids (H1) oder des Ellipsoids (EL2) angeordneten Lichtfleck (LF) ausgesandte Laserlicht in einem Brennpunkt (B2; B5) des Ellipsoids (EL1) bzw. des Hyperboloids (H2) fokussiert wird, in welchem die Endfläche (EF) des Wellenleiters (WL) anzuordnen ist.

4. Koppeloptik nach Anspruch 1, **gekennzeichnet durch** zwei im Strahlengang des Laserlichts angeordnete Hohlspiegel, deren Spiegelflächen durch Rotationsparaboloide (P1, P2) definiert sind, die so bemessen sind,
daß das von dem im Brennpunkt (B7) eines (P1) der beiden Paraboloide (P1, P2) angeordneten Lichtfleck (LF) des Lasers (HL) ausgesandte Laserlicht im Brennpunkt (B8) des anderen Paraboloids (P2) fokussiert wird, in welchem die Endfläche (EF) des Wellenleiters (WL) anzuordnen ist.

5. Koppeloptik nach Anspruch 1, **gekennzeichnet durch** zumindest einen Hohlspiegel (P1) und zumindest eine brechende Linse (L), die im Strahlengang (S0, S1, S2) des Laserlichts nacheinander angeordnet sind.

6. Koppelanordnung mit einem Halbleiterlaser, einem optischen Wellenleiter und einer Koppeloptik nach einem der vorhergehenden Ansprüche, **dadurch gekennzeichnet,** daß die Endfläche (EF) des Wellenleiters (WL) schräg zur Achse (AW) dieses Wellenleiters (WL) und auch schräg zum Achsstrahl (S0) des auf die Endfläche (EF) einfallenden Laserstrahls (LS) angeordnet ist, und/oder daß der Achsstrahl (S0) in einem Winkel ($\theta$) zur Achse (AW) des Wellenleiters (WL) auf die Endfläche (EF) einfällt.

# FIG 1

# FIG 2

# FIG 3

# FIG 4

FIG 5

FIG 6

FIG 7

EP 0 308 604 A1

## FIG 8

## FIG 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 014 961 (HARTING) * Seite 2, Zeilen 1-11,24-26; Seite 3, Zeilen 1-5; Ansprüche 1,2,6,7 * | 1 | G 02 B 6/42 |
| A | --- | 4 | |
| X | IBM TECHNICAL DISCLOSURE BULLETIN, Band 21, Nr. 4, September 1978, Seite 1685, New York, US; E.G. LEAN: "Taps for multimode fibers" | 1,2 | |
| A | IDEM | 3 | |
| | --- | | |
| A | GB-A-2 014 751 (TRW) * Ansprüche * | 1 | |
| | --- | | |
| A | PATENT ABSTRACTS OF JAPAN, Band 8, Nr. 111 (E-246)[1548], 24. Mai 1984; & JP-A-59 25 282 (FUJITSU K.K.) 09-02-1984 * Abstract * | 1 | |
| | --- | | **RECHERCHIERTE SACHGEBIETE (Int. Cl.4)** |
| A | PATENT ABSTRACTS OF JAPAN, Band 5, Nr. 150 (P-81)[822], 22. September 1981; & JP-A-56 81 809 (MATSUSHITA DENKO K.K.) 04-07-1981 * Abstract * | 1 | G 02 B |
| | --- | | |
| P,X | PATENT ABSTRACTS OF JAPAN, Band 12, Nr. 88 (P-678)[2935], 23. März 1988; & JP-A-62 222 211 (MITSUBISHI ELECTRIC CORP) 30-09-1987 * Abstract * | 1-3 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 20-12-1988 | PFAHLER R. |